# EUROPEAN PATENT APPLICATION

(11) **EP 2 215 926 A1**
(43) Date of publication of application: **11.08.2010**
(21) Application number: 09425038.8
(22) Date of filing: 05.02.2009
(51) Int. Cl.: A47B 1/05

(54) **Extension table, in particular for railway passenger coach**

(71) Applicant: Internitalia Design Srl, 04010 Sermoneta (LT) (IT)
(72) Inventor: Ciocca, Massimiliano, 04018 Sezze (LT) (IT)
(74) Representative: Cioncoloni, Giuliana

(57) **Abstract**

An extension table for railway passenger coach comprises a table top (1), a base (4) and two extensions (6, 7) movable between the table top and the base. Each extension (6, 7) comprises a shelf (18) having an upper surface (19), a pair of supporting arms (24, 24) being hinged to its own shelf (18) and provided with a sliding block (27). Further, each extension (6, 7) comprises an elastic means (32) being interposed between the shelf (18) and each arm (24) to keep the latter wide apart so that, when the extension (6, 7) is in its extended position, the upper surface (19) of the shelf (18) is coplanar with an upper face (14) of the table top (1) and, when the extension (6, 7) is in the retracted position, the upper surface (19) of the shelf (18) contacts a lower surface (15) of the table top (1).

## Description

The present invention relates to an extension table, in particular for railway passenger coach.

French patent No. 90 05057 discloses a table comprising a structure that is formed by a table top securely attached to a shelf member, which in turn is joined through a pedestal to the floor of a railway passenger coach. Formed between the table top and the shelf member are housings for two extensions, which are symmetrically mounted movable from an extended position, being adjacent and coplanar to the table top, to a retracted position, where each extension is received in its housing, and vice versa. Each extension is connected to the table structure by means of a pair of elongated extension bars. Each extension bar is made to slide under a roller cam along a first inclined plane and, simultaneously, to move inside an intermediate rail also being made to vertically move by means of a second inclined plane parallel to the first one.

The cited table, due to the elongated extension bars and the kinematic mechanism obtained by means of roller cams, extension bars, and intermediate rails as above mentioned, occupies much space over passenger's knees, so that the available leg room is reduced and the seating place is made uncomfortable. In addition, said kinematic mechanism is constructively very complex and is further complicated by elastic elements counteracting the vertical displacement of the intermediate rails. Furthermore, too many parts are required for the operation of the extensions from the retracted position to the extended one, and vice versa. These parts are susceptible to wear and accidental damage even after a normal and correct use of the above-cited table, with a result of a malfunction and failure thereof.

The present invention aims at overcoming drawbacks of the prior art. A main object of the present invention is to provide an extension table, in particular for railway passenger coach, that is space saving so that the seating place is made more comfortable for the passenger.

Another main object of this invention is to provide an extension table, in particular for railway passenger coach, that is simple and practical in its operation.

Furthermore, another main object of this invention is to provide an extension table, in particular for a railway passenger coach, that is made of a reduced number of parts.

Yet, an object of this invention is to provide an extension table, in particular for a railway passenger coach, that is resistant and long lasting.

These and various other objects and advantages are attained with an extension table, in particular for railway passenger coach, according to claim 1 of this invention.

This invention will be now described referring to a preferred embodiment thereof, taken in connection with the accompanying drawings, in which:
Figure 1 is a diagrammatic partially cross-sectioned fragmentary side view of the extension table according to the invention;
Figure 2 is a diagrammatic cross-sectional view of the extension table in Figure 1 taken on the offset line II-II;
Figure 3 is a diagrammatic sectional view of the extension table in Figure 2 taken on the offset line III-III, the pedestal being partially cross-sectioned differently from the rest;
Figure 4 is an exploded perspective view of the extension table according to the invention, with parts being cross-sectioned;
Figure 5 is an enlarged diagrammatic sectional view taken on the offset line III-III in Figure 2 only to a left-hand extension of the extension table; and
Figures 6, 7, and 8 are enlarged diagrammatic partial cross-sectioned views similar to that one of Figure 3 showing three different positions of the table extensions.

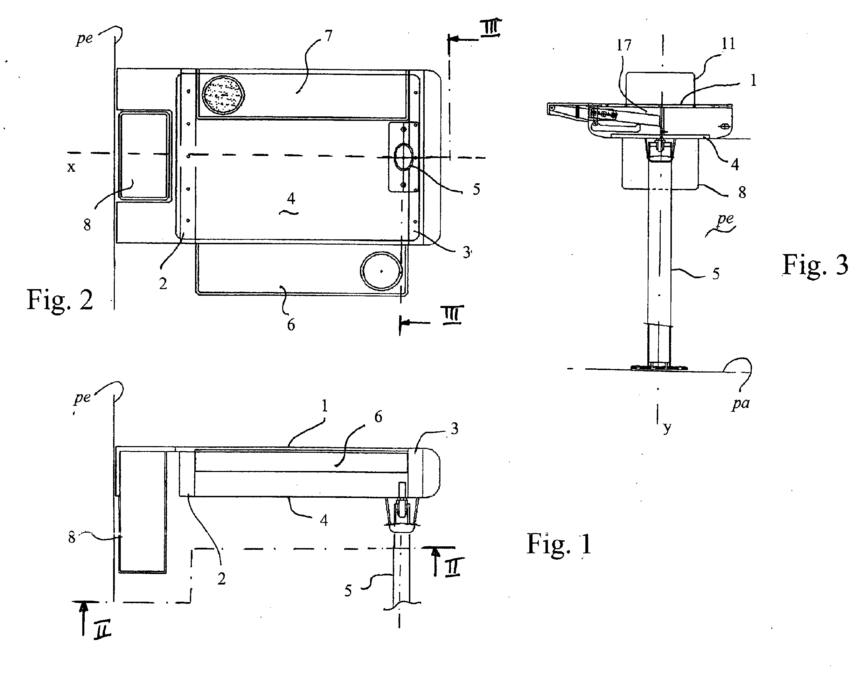

Referring to the drawings in Figures 1 to 3, diagrammatic sectional views are therein shown as generally taken from a side, from the bottom and from an end respectively of an extension table, which is particularly developed as a furniture in a railway passenger coach. As shown in Figures 1 and 2, the extension table is fixed along its left-hand end to a wall *pe* of the railway passenger coach, and it is extendable at both its sides with respect to a longitudinal symmetry plane that is indicated with its trace x in Figure 2.

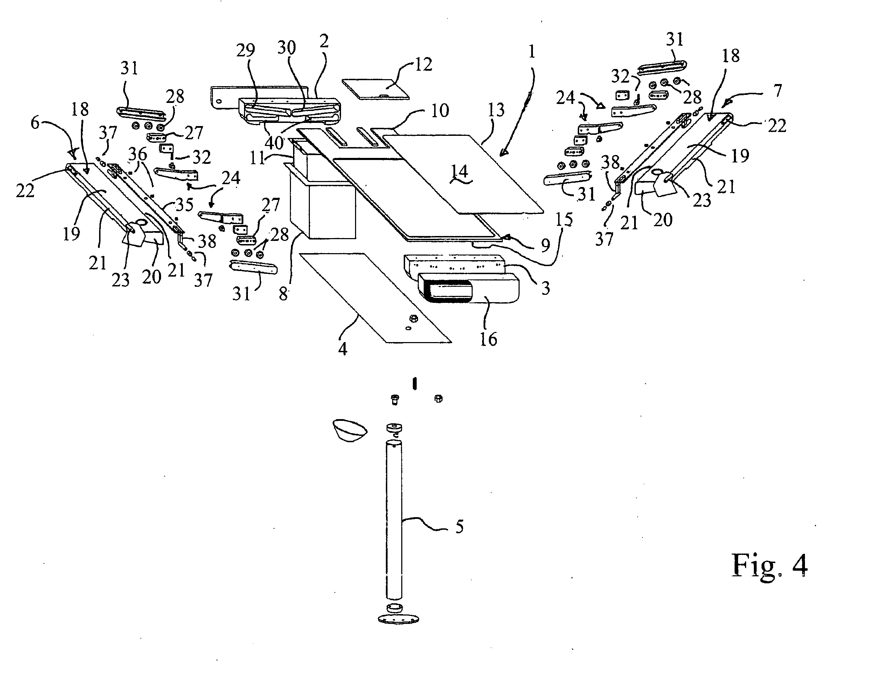

Referring also to Figure 4 that is an exploded perspective view of the extension table according to the invention, it generally comprises a table top 1, front and rear panels 2, 3, a base 4, a pedestal 5 and two extensions 6, 7. A trash can 8 is interposed between the extension table and the railway passenger coach wall *pe* (Figures 1-3) to which the extension table is rigidly connected. At an end opposite to the wall *pe*, the extension table rests on a floor pa (Figure 3) through the pedestal 5, which is fixed at the top to the base 4 in a conventional manner not described in detail.

In the lengthwise direction of the base 4, the table longitudinal symmetry plane has a trace in the drawing sheet that is indicated by a broken line x and y respectively in Figures 2 and 3. As shown in Figure 4, the table top 1 comprises a bearing plane 9 that is connected to the wall *pe* by means of a cut-out portion 10 for receiving the trash can 8. The trash can 8 is provided with an extractable internal receptacle 11 and is closed by a cover 12. The bearing plane 9 of the table top 1 supports a board 13 having an upper face 14. The bearing plane 9 has a lower surface 15 opposite to the upper face 14.

The front and rear panels 2, 3 are perpendicular to the table longitudinal symmetry plane and have an upper part and a lower part. The front and rear panels 2, 3 in their upper part are attached to the bearing plane 9 of the table top 1 adjacent the wall *pe* and near the pedestal 5, respectively. The front and rear panels 2, 3 project downward from the table top 1 and are sustained at the bottom by the base 4. Positioned in front of the rear panel 3 is a pad 16 that is shown partially cross-sectioned in Figure 4 and contains shock absorbing material as a passenger bumper. Formed between the table top 1 and the base 4 are housings 17 (Figure 3) for the two extensions 6, 7, which are described in more detail below. The two extensions 6, 7 are movable with respect to the table longitudinal symmetry plane, between the front and rear panels 2, 3 thereof, from an extension extended position adjacent the table top 1, as shown for the extension 6 in Figures 2 and 3, to an extension retracted position, in the respective housing 17 under the table top 1, as shown for the extension 7 in the same figures, and vice versa.

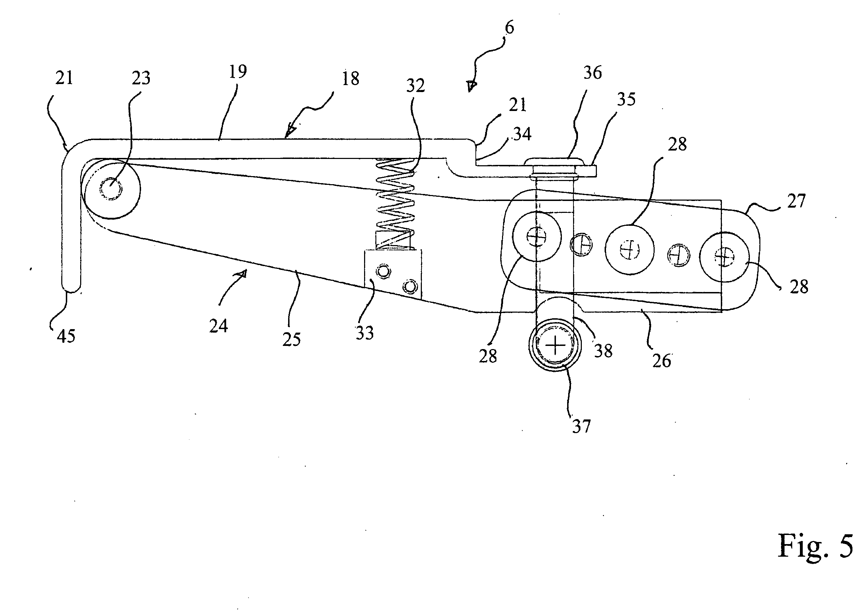

As shown in Figures 1 to 3, each of the two extensions 6, 7 has an elongated flattened box-shaped external structure. This box-shaped external structure is shown only partially in Figure 3 to allow an internal kinematic mechanism of the extensions to be watched and considered in its operation. Particularly, with specific reference for convenience to the extension 6 as represented in Figures 4 and 5, which are an exploded perspective view of the extension table and an enlarged sectional view of the sole extension 6, respectively, the box-shaped external structure comprises a shelf 18. The shelf 18 has an upper surface 19, short sides 20, 20 being parallel to the front and rear panels 2, 3, and long sides 21, 21 that are proximal and distal respectively, to the table longitudinal symmetry plane. In the extensions 6 and 7 in Figure 4, as shown through a cut-out in the shelf external structure, pivots 22, 23 are fixed near the distal long side 21 of the shelf 18. The kinematic mechanism of the extension 6 comprises a pair of supporting arms 24, 24, each arm 24 being formed by an upward sloping portion 25 and a generally horizontal portion 26 (Figure 5). Each supporting arm 24 is hinged, in a free end of its upward sloping portion 25, on a pivot 22, 23. Each supporting arm 24 is provided with a sliding block 27 in its generally horizontal portion 26. A plurality of rollers 28 are idle mounted on an external side of the sliding block 27.

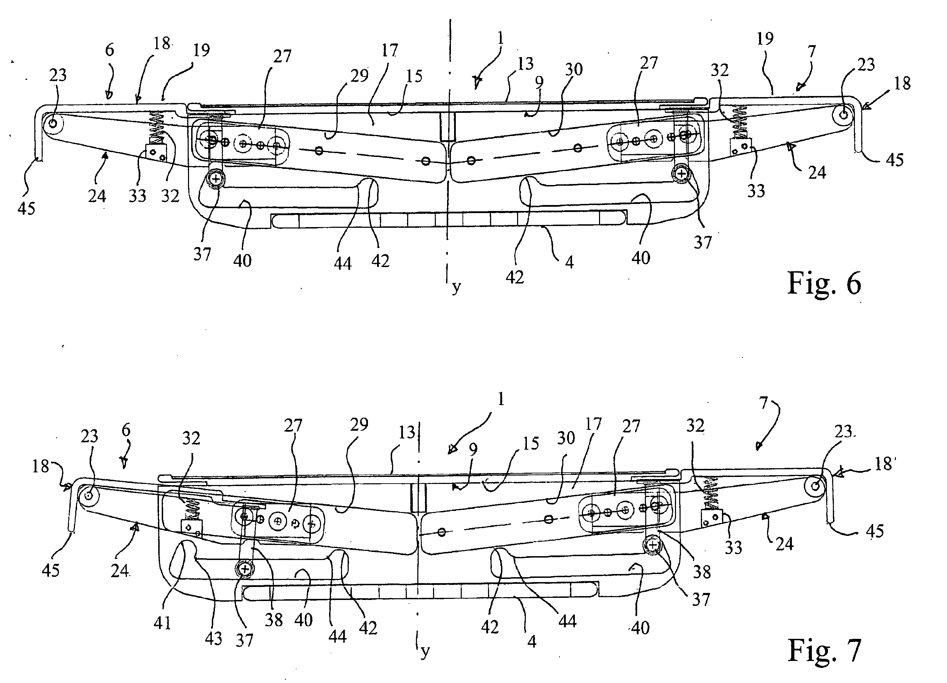

Reference is made now to Figure 4 and Figures 6, 7, and 8, the latter being enlarged diagrammatic partial cross-sectioned views similar to that of Figure 3 showing three different positions of the extensions of the table. As it can be appreciated, a pair of upper grooves 29, 30, that are symmetrically sloping downward with respect to the table longitudinal symmetry plane whose trace y is represented in Figures 6 to 8, are formed in the facing surfaces of the front and rear panels 2, 3. Although not shown in detail in Figures 6 to 8, an inserted seat 31 can be suitably fixed inside each upper groove 29, 30. The plurality of rollers 28, which are idle mounted on the sliding blocks 27, can roll along the inserted seat 31. Thereby the sliding blocks 27 move along the upper grooves 29,30.

The above described arrangement of extensions 6, 7 and front arid rear panels 2, 3 allows *per se* shelves 18, 18 to be movable between an extension extended position adjacent the table top 1, and an extension retracted position inside the respective housing 17 under the table top 1. However, since each shelf 18 is hinged on its own supporting arm 24, and the supporting arm 24 is constrained to slide in the sloping upper grove, the shelf 18 would be prevented to take on a horizontal condition in both the extension extended and retracted position. It is particularly relevant that each shelf in the extension extended position takes on a horizontal condition and, preferably, coplanar with the table top 1.

In order to achieve this result, the extension table according to the present invention provides a counteracting elastic means that is interposed between the shelf 18 and each arm of the pair of the supporting arms 24, 24, to keep mutually wide apart the shelf 18 and the supporting arm 24. Thus, when the extension 6, 7 is in its extended position, the upper surface 19 of the shelf 18 is coplanar with the upper face 14 of the board 13 of the table top 1, and when the extension 6, 7 è in its retracted position, the upper surface 19 of the shelf 18 contacts the lower surface 15 of the bearing plane 9 of the table top 1.

In a currently preferred embodiment, the counteracting elastic means that is interposed between the shelf 18 and each arm of the pair of the supporting arms 24, 24 is made in the form of a helical spring 32 that abuts between a spring holder 33, which is rigidly connected to the supporting arm 24, and the extension shelf 18 in the lower surface thereof.

Suitably, as best shown in Figure 5, each shelf 18 is extended, in its proximal long side 21, with a step 34 that is obtained by a strip 35 being attached to the shelf 18 itself. In the extension extended position, the strip 35 is designed to contact the lower external edge of the table top 1. For this reason, bumper seals 36 preventing a direct contact of the strip 35 with the table top 1, more in particular with its bearing plane 9, are engaged in through holes that are bored in the strip 35. Noises due to vibrations, if any, being transmitted from the railway passenger coach to its furniture, are prevented.

Advantageously, in order to gradually reduce the thickness of the extension and make easy the insertion thereof in the housing 17 of the extension table and, vice versa, to facilitate the extraction of the extension without useless friction of the shelf 18 with the external edge of the table top 1, there is provided a retaining means withstanding said elastic means. According the embodiment above described said elastic means is the helical spring 32, which is interposed between the shelf 18 and each arm of the pair of supporting arms 24, 24.

In a currently preferred embodiment, such a retaining means comprises, as shown in particular in Figures 4 e 5, for each extension 6, 7 a pair of opposite concentric roller pins 37 that are connected to the ends of respective small retaining arms 38. The small retaining arms 38 project downward from the proximal long side 21 of the extension shelf 18, i.e. the strip 35 that is depressed in the step 34 with respect to the remaining upper surface 19 of the shelf 18. The opposite concentric roller pins 37 slide along respective lower guiding grooves 40, 40 that are formed in the front and rear panels 2, 3. Each lower guiding groove 40 is generally horizontal and terminates with upward sloping terminal sections 41, 42, in the groove ends that are the most distant and nearest with respect to the longitudinal symmetry plane of trace y of the table. When the roller pin 37 is in the most distant terminal section 41 from the table longitudinal symmetry plane, as shown for both the extensions in Figure 6, the upper surface 19 of the extension shelf 18 is coplanar with the upper face 14 of the board 13 of the table top 1. On the contrary, when the roller pin 37 is in the nearest terminal section 42 to the longitudinal symmetry plane of the table, the upper surface 19 of the extension shelf 18 contacts the lower surface 15 of the bearing plane 9 of the table top 1.

It should be clear that the lower guiding grooves 40 act as linear cams whose cam following, i.e. the roller pin 37 on the small retaining arm 38 serves to adjust the divarication of the shelf 18 with respect to the supporting arm 24. By virtue of such a cam arrangement the shelf 18 is able to displace on the upper groove 29, 30 by means of the sliding block 27 without rubbing the external edge of the table top 1. Further, by virtue of the sloping terminal sections 41, 42, the roller pin 37 has precise stop positions, which prevent the sliding block 27 of the supporting arm 24 to be accidentally displaced. As one can note, the terminal section 41 is more sloping than the terminal section 42 and has a sharp edge 43 (Figure 7) that hinders a unintentional command for closing the extension upon the approach of the shelf toward the supporting arms thereof. On the contrary, the terminal section 42 has an edge 44 being radiused with a curvature radius greater than the sharp edge 43 so that the edge 44 does not oppose the manual extraction of the shelf 18, when the latter is drawn by acting on a corner 45 formed in the shelf 18.

In order to resume the operation, even if it is *per se* clear, reference is made to Figures 6 to 8. Depicted in Figure 6 is the extension table according to the invention, in which both table extensions are in an extended position. In this position both shelves 18 of the extensions 6, 7 have their proximal short sides 21, 21 being extended by the stripes 35 that form the step 34 with respect to the upper surface 19 of the shelf 18 (Figure 5), against the external edges of the table top 1. The sliding block 27 inside the upper groove 29 is in its most distant position from the table longitudinal symmetry plane as indicated by the trace y, and the roller pin 37 of the small retaining arm 38 being hanged from the strip 35, is in the sloping terminal section 41 of the lower guiding groove 40. The upper surface of the shelves 18 of the extensions 6, 7 is coplanar with the upper face 14 of the board 13 of the table top 1.

Depicted in Figure 7 is the extension table according to the invention, in which the left-hand table extension 6 is in an intermediate position between the extended position and a retracted position. In this position the shelf 18 of the extension 6 has its upper surface 19 being tilted with respect to the table top 1, the sliding block 27 is in an intermediate position in the upper groove 29, and the roller pin 37 of the small retaining arm 38 is in the horizontal section of the lower groove 40.

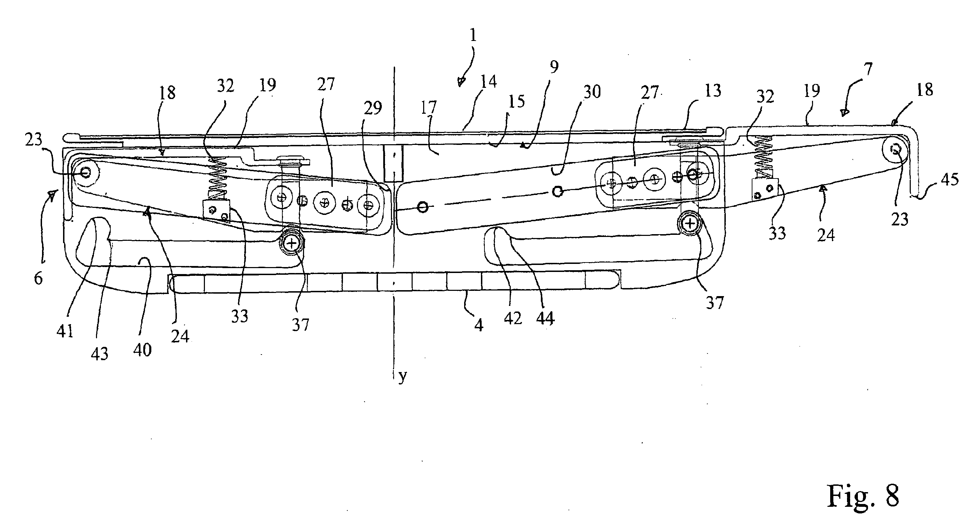

Depicted in Figure 8 is the extension table according to the invention, in which the left-hand table extension 6 is in the retracted position. In this position the shelf 18 of the extension 6 is in the housing 17 of the extension table, the external edge of the extension 6 being aligned with the front and rear panels. The sliding block 27 inside the upper groove 29 is in its nearest position to the longitudinal symmetry plane as indicated by the trace y, and the roller pin 37 of the small retaining arm 38 being hanged from the strip 35, is in the sloping terminal section 42 of the lower guiding groove 40. In order to return from this position to the extended one it is sufficient to draw outwards the shelf 18 through its corner 45, so that the roller pin 37 is released from the sloping terminal section 42, and the sliding block 27 is displaced in the upper groove 29 towards the most distant end from the table longitudinal symmetry plane.

The extended and retracted positions of the shelf 18, as well as all the intermediate positions, are assured by the counteracting elastic means and the retaining means, in such a way that the shelf 18 reaches all the intermediate positions without rubbing its upper surface 19 against the external edge of the table top 1. Further, the forward and back motions of the shelf 18 are absolutely linear as if the shelf 18 slides along four rails.

The extended and retracted positions of the shelf 18 are clearly defined by the position of the roller pin 37 in the ends of the sloping terminal section 41, 42 in the lower guiding grooves 40. However, the roller pin 37 can be ready displaced when a user acts on the shelf against the action of the elastic means.

## Claims

1. An extension table, in particular being attached to a wall (*pe*) of a railway passenger coach, which is adapted to be extended on both sides with respect to a table longitudinal symmetry plane (x-y), comprising:
- a table top (1) having an upper face (14) and a lower surface (15) opposite thereto,
- front and rear panels (2, 3) being perpendicular to the table longitudinal symmetry plane (x-y) and projecting downward from the table top (1),
- a base (4) which front and rear panels (2, 3) are attached to,
- a pedestal (5) sustaining the base (4) on a floor (*pa*) of the railway passenger coach;
housings (17) being formed between the table top (1) and the base (4) for two extensions (6, 7) that are movable with respect to the table longitudinal symmetry plane (x-y) between the front and rear panels (2, 3) from an extension extended position being adjacent to the table top (1), to an extension retracted position in its respective housing (17) under the table top (1), and vice versa, each extension (6, 7) comprising a shelf (18) having an upper surface (19), short sides (20, 20) being parallel to the front and rear panels (2, 3) and long sides (21, 21) being proximal and distal with respect to the table longitudinal symmetry plane (x-y), **characterised in that** each extension (6, 7) further comprises:
- a pair of supporting arms (24, 24), each arm (24) having an external end hinged to its own shelf (18) on a pivot (22, 23) being fixed near the distal long side (21) of the shelf (18), and a sliding block (27) toward an internal end of the supporting arm (24); and
- an elastic means being interposed between the shelf (18) and each arm (24) of the pair of supporting arms (24), to move away and keep wide apart the shelf (18) from the supporting arm (24);
so that, when the extension (6, 7) is in the extended position, the upper surface (19) of the shelf (18) is coplanar with the upper face (14) of the table top (1) and, when the extension (6, 7) is in the retracted position, the upper surface (19) of the shelf (18) contacts the lower surface (15) of the table top (1).

2. The extension table according to claim 1, wherein front and rear panels (2, 3) have facing surfaces where a pair of upper grooves (29, 30) being symmetrically sloping downward with respect to the table longitudinal symmetry plane (x-y) are formed.

3. The extension table according to claim 2, wherein the sliding block (27) of each supporting arm (24) slides inside the respective upper groove (29, 30) being formed on the front and rear panels (2, 3) so that, when the sliding block (27) is in the most distant position from the table longitudinal symmetry plane (x-y), the upper surface (19) of the shelf (18) of the extension (6, 7) is coplanar with the upper face (14) of the table top (1) and, when the sliding block (27) is in the nearest position to the table longitudinal symmetry plane (x-y), the upper surface (19) of the shelf (18) of the extension (6, 7) contacts the lower surface (15) of the table top (1).

4. The extension table according to claim 2, wherein the sliding block (27) of each supporting arm (24) bears a plurality of idle rollers (28) inside the upper grooves (29, 30) formed in the front and rear panels (2, 3).

5. The extension table according to claim 4, wherein the plurality of idle rollers (28) roll in an inserted seat (31) inside the upper grooves (29, 30) formed in the front and rear panels (2, 3).

6. The extension table according to claim 1, wherein retaining means withstands the elastic means being interposed between the shelf (18) of each extension (6, 7) and each arm (24) of the pair of supporting arms (24, 24) of the shelf (18) itself.

7. The extension table according to claim 6, wherein said retaining means comprises:
- a pair of generally horizontal lower guide grooves (40, 40) terminating with terminal sections (41, 42) being sloping upward, said pair of lower guide grooves (40, 40) being formed in facing surfaces of the front and rear panels (2, 3);
- a pair of opposite concentric roller pins (37, 37), which are connected to the ends of respective small retaining arms (38, 38) projecting downward from a proximal end (35) of the extension shelf (18), the proximal end (35) being depressed with respect to the remaining upper surface (19) of the shelf (18), the roller pins (37, 37) being able to roll in the respective lower guide grooves (40, 40) being formed in the front and rear panels (2, 3) so that, when a roller pin (37) is in the most distant terminal section (41) from the table longitudinal symmetrical plane (x-y), the upper surface (19) of the extension shelf (18) is coplanar with the upper face (14) of the table top (1), and when the roller pin (37) is in the nearest terminal section (42) to the table longitudinal symmetrical plane (x-y), the upper surface (19) of the extension shelf (18) contacts the lower surface (15) of the table top (1).

8. The extension table according to claim 7, wherein said proximal end (35) of the extension shelf (18) carries bumper seals (36).

9. The extension table according to claim 1, wherein the elastic means being interposed between the shelf and each arm (24) of the pair of supporting arms (24, 24) comprises an helical spring (32) abutting between a spring-holder (33), being rigidly connected to the supporting arms (24), and the extension shelf (18).

10. The extension table according to claim 1, wherein the extension table is attached to the railway passenger coach wall (*pe*) with a covered trash can (8) being interposed.
